Europäisches Patentamt

European Patent Office

Office européen des brevets

(11) Numéro de publication: **0 277 056**
**A1**

## (12) DEMANDE DE BREVET EUROPEEN

(21) Numéro de dépôt: **88400057.1**

(22) Date de dépôt: **13.01.88**

(51) Int. Cl.⁴: **F 16 F 13/00**
**B 60 K 5/12**

(30) Priorité: **14.01.87 FR 8700314**

(43) Date de publication de la demande:
**03.08.88  Bulletin  88/31**

(84) Etats contractants désignés:
**AT BE DE ES FR GB GR IT LU NL SE**

(71) Demandeur: **CAOUTCHOUC MANUFACTURE ET PLASTIQUES**
**143bis, rue Yves le Coz**
**F-78005 Versailles  (FR)**

(72) Inventeur: **De Fontenay, Etienne**
**4, Route de Moulins**
**F-58000 Nevers  (FR)**

(54) **Dispositif élastique d'isolation antivibratoire à amortissement hydraulique intégré et butées de limitation de débattements internes.**

(57) Dispositif d'isolation antivibratoire à amortissement hydraulique intégré, comportant un support élastique constitué d'une membrane conique épaisse en composition élastomérique (3) adhérisée à des armatures rigides interne (5) et externe (4) et sertie dans un boitier rigide (1) enfermant un liquide d'amortissement agissant par inertie d'une colonne de grande longueur, caractérisé en ce qu'un ensemble (9), constitué de butées progressives de limitation des débattements solidaires d'une rondelle support, est enfermé dans la chambre ainsi constituée et en ce que le volume destiné à l'expansion du liquide d'amortissement est reporté à l'extérieur du boitier rigide (1) qui délimite le support élastique.
Application à la suspension des groupes motopropulseurs des véhicules ou des cabines de poids-lourds.

1 / 2

FIG_1a

EP 0 277 056 A1

**Description**

L'invention concerne le domaine des isolations antivibratoires de machines, plus particulièrement les supports élastiques de moteurs d'automobiles ou les supports de cabines de poids lourds. Elle est relative aux supports à grande flexibilité avec amortissement hydraulique intégré accroissant la rigidité apparente dans une gamme de fréquences assez basse, très limitée au moyen d'une colonne liquide de grande longueur par rapport à sa section, dont la résonance s'oppose aux déplacements de grande amplitude sans néanmoins détruire un filtrage élastique à des fréquences plus élevées.

Une famille de tels supports élastiques est généralement réalisée au moyen d'une membrane conique épaisse en composition élastomérique qui, adhérisée à un boîtier porteur et à une armature centrale de fixation au carter à suspendre, groupe motopropulseur par exemple, enferme une chambre contenant un liquide amortisseur que l'on refoule dans un volume d'expansion, sous faibles pression, à travers un dispositif à longue colonne d'inertie, la plus grande part de la charge verticale étant portée par déformation de l'élastomère constituant la membrane conique.

Les brevets FR 2.467.724 et FR 2.511.105 de PEUGEOT décrivent deux dispositifs répondant à cette définition et qui présentent l'avantage d'intégrer, à l'intérieur du dispositif élastique, la colonne amortissante, ménagée dans une paroi rigide noyée dans le circuit hydraulique ainsi constitué, après scellement - par exemple par sertissage sur un couvercle de fixation pour le boîtier - du support ainsi devenu monobloc.

Un tel dispositif, qui présente une grande souplesse dans toutes les directions, reçoit, lorsqu'il est utilisé pour la suspension d'un groupe motopropulseur, des réactions, dues au couple moteur, qui provoquent des déformations longitudinales importantes, préjudiciables à la tenue en fatigue, auxquelles il est remédié par adjonction de butées de limitation de course, telles celles décrites dans le certificat d'addition FR 2.543.494 au brevet FR 2.535.261 de CITROEN et PEUGEOT.

L'analyse de l'art antérieur montre qu'il y a contradiction entre la recherche d'une grande souplesse, avantageuse pour un bon filtrage des vibrations et celle d'une résistance de longue durée aux efforts importants dus au montage sur un groupe motopropulseur qui exerce le couple moteur démultiplié par les rapports les plus courts de la boîte de vitesse, sur un court bras de levier constitué par ses supports élastiques.

L'invention a pour objet de résoudre cette difficulté en incorporant dans le dispositif antivibratoire, de présentation devenue maintenant classique, adopté par de nombreux constructeurs d'automobiles, la fonction butée de limitation de course, tout en y maintenant la fonction d'amortissement hydraulique de certaines basses fréquences, par l'artifice d'une longue colonne liquide inertielle s'opposant, par résonance, aux vibrations incidentes de basse fréquence et d'amplitude millimétrique.

Les butées élastiques nécessaires, qui, dans les réalisations de l'art antérieur, se trouvaient souvent détruites par un travail de friction excessif, lors des reprises pulsatoires de couple moteur à bas régime par exemple, se trouvent, dans l'invention, protégées de l'échauffement local et de la détrition, en baignant dans le liquide amortisseur, une des caractéristiques de l'invention consistant à reporter le volume d'expansion pour le liquide d'amortissement refoulé par les débattements à l'extérieur du boîtier.

Pour ce faire, deux variantes du dispositif sont utilisables. La première consiste à enrouler la colonne de liquide d'amortissement dans une gorge circulaire ménagée à la périphérie du boîtier rigide et d'en assurer la mise en communication avec une chambre d'expansion cylindrique, formée par une membrane élastique, fixée par des colliers, à ses extrémités, autour du boîtier.

Une autre solution, équivalente, consiste à faire sortir la colonne de liquide d'amortissement, dans un tube assurant la liaison avec un volume élastique, constitué d'une vessie monobloc, en composition élastomérique, obtenue par moulage à l'extrémité dudit tube de liaison.

Les caractéristiques et variantes de l'invention seront mieux comprises à la lecture de la description ci-après et des dessins qui s'y rapportent et dans lesquels :

　　- la figure 1 met en évidence les possibilités de débattement dans toutes les directions du dispositif d'isolation antivibratoire ;

　　- la figure 2 est une demie-coupe axiale du dispositif, dans une autre configuration ;

　　- la figure 3 est une vue, en couple partielle, de la vessie constituant le volume élastique externe, utilisée dans la configuration de la figure 2.

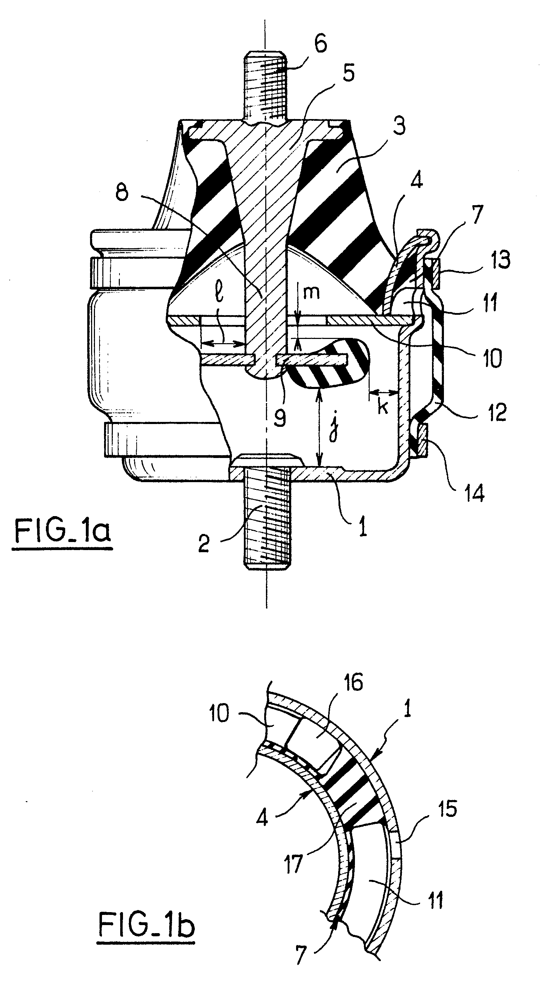

La figure 1, dont la vue 1a est une demie coupe axiale du dispositif d'isolation antivibratoire assemblé et la vue 1b une coupe horizontale partielle au niveau de la colonne de liquide d'amortissement, met en évidence les possibilités de débattement, dans toutes les directions du dispositif d'isolation antivibratoire.

Sur la vue 1a, qui montre, en coupe, le dispositif assemblé, les composants de l'enceinte sont constitués par :

- un boîtier rigide (1), généralement métallique, permettant la fixation sur le chassis par l'intermédiaire d'une vis centrale (2) ;

- une membrane conique en composition élastomérique (3), dont la déformation axiale porte la charge statique, due à la pesanteur, sur un groupe motopropulseur ou une cabine de poids lourds ;

- une armature rigide externe (4), généralement métallique, adhérisée au cours de l'opération de vulcanisation à la membrane conique en composition élastomérique (3), ladite armature rigide externe (4) étant sertie, de façon étanche, sur le boitier rigide (1) grâce à l'existence d'un bourrelet en composition élastomérique (7) à la périphérie de ladite armature rigide externe (4) ;

- une armature rigide interne (5) qui porte vers l'extérieur une vis de fixation (6) en direction de la charge portée et, vers l'intérieur du dispositif, un axe (8) destiné à supporter l'ensemble (9) constitué des butées de limitation de débattement solidaires de leur rondelle support, ladite armature rigide interne (5) étant également adhérisée, au cours de l'opération de vulcanisation, à la membrane conique en composition élastomérique (3) ;

- l'ensemble (9) constitué des butées de limitation de débattement solidaires de leur rondelle support, solidement serti sur l'axe (8) de l'armature rigide interne (5), par rivetage à froid ou à chaud grâce à un chauffage local par induction, interrompu avant qu'il n'y ait dégradation des compositions élastomériques voisines.

Les butées de limitation de débattement de l'ensemble (9) sont destinées à limiter les courses dans les trois directions et sont constituées d'une composition élastomérique amortissante et très résistante à la fatigue, telle que, à titre d'exemple non limitatif, une formulation à base d'élastomère de polyuréthane.

La limitation de course dans le sens de la compression se fait par appui progressif sur le fond du boitier rigide (1) avec un jeu axial (j) en position de fonctionnement.

La limitation de course dans le sens de la détente se fait par contact avec une rondelle métallique d'appui (10), interposée, avant le sertissage, entre le boitier rigide (1) et l'armature rigide externe (4). La rondelle métallique d'appui (10) sera engagée sur l'axe (8) de l'armature rigide interne (5) avant le rivetage de l'ensemble (9) constitué des butées et de leur rondelle support. Même s'il y avait contact, à l'état libre, entre la rondelle métallique d'appui (10) et les butées de limitation de débattement de l'ensemble (9), il se créerait, dans la position en charge, un jeu (m) entre ces deux éléments.

Dans le sens transversal, un contact élastique avec le diamètre intérieur du boitier rigide (1) limitera le jeu diamétral (k), tandis, qu'après écrasement maximal, l'excentrement ne devra pas dépasser la course libre (1) entre l'axe (8) de l'armature rigide interne (5) et la rondelle métallique d'appui (10).

La rondelle métallique d'appui (10) peut être en contact étanche avec l'armature rigide externe (4) grâce à la forme de la membrane conique en composition élastomérique (3) terminée par un bourrelet au bord de l'armature rigide externe (4).

Le dispositif est complété par une membrane cylindrique externe (12), en composition élastomérique, fixée à l'extérieur du boitier rigide (1) par des colliers de serrage (13) et (14) de technologie connue.

Du fait de cette disposition, le remplissage du dispositif par le liquide d'amortissement sera aisément réalisé, après le sertissage de l'ensemble et avant la fixation des colliers de serrage (13) et (14).

La vue 1b, qui est une coupe horizontale partielle de la vue 1a au niveau de la colonne de liquide d'amortissement (11) permet d'illuster les communications dans le dispositif.

Un trou (16), pratiqué - par exemple sous forme d'encoche - au bord de la rondelle métallique d'appui (10) (vue par dessus) assure la mise en communication de la chambre intérieure au dispositif - constituée du boitier rigide (1) et de la membrane conique en composition élastomérique (3) - avec une gorge circulaire où est ménagée une colonne (11) pour le liquide d'amortissement. Ladite colonne (11) est interrompue, au voisinage du trou (16) de la rondelle métallique d'appui (10) par une excroissance (17) du bourrelet de composition élastomérique (7) situé à la périphérie de l'armature rigide externe (4), ledit bourrelet venant obturer la section de la colonne (11).

L'autre extrémité de la colonne de liquide d'amortissement (11) est mise en communication avec l'extérieur du boitier rigide (1) par un trou (15) ménagé dans la paroi dudit boitier rigide, en direction de la membrane cylindrique externe en composition élastomérique (12).

Un des avantages essentiels de l'invention est obtenu grâce à cette configuration. La disposition relative, c'est-à-dire l'orientation, au moment du sertissage, du trou (15) menagé dans la paroi du boitier rigide (1) et du trou (16) pratiqué dans la rondelle métallique d'appui (10) permet, en effet, l'ajustement de la longueur de la colonne de liquide d'amortissement (11) qui pourra donc dépasser les trois quarts de la périphérie du boitier rigide (1). Cette possibilité d'ajustement de la longueur de la colonne de liquide d'amortissement (11) est donc un paramètre de réglage de la fréquence de résonance du dispositif.

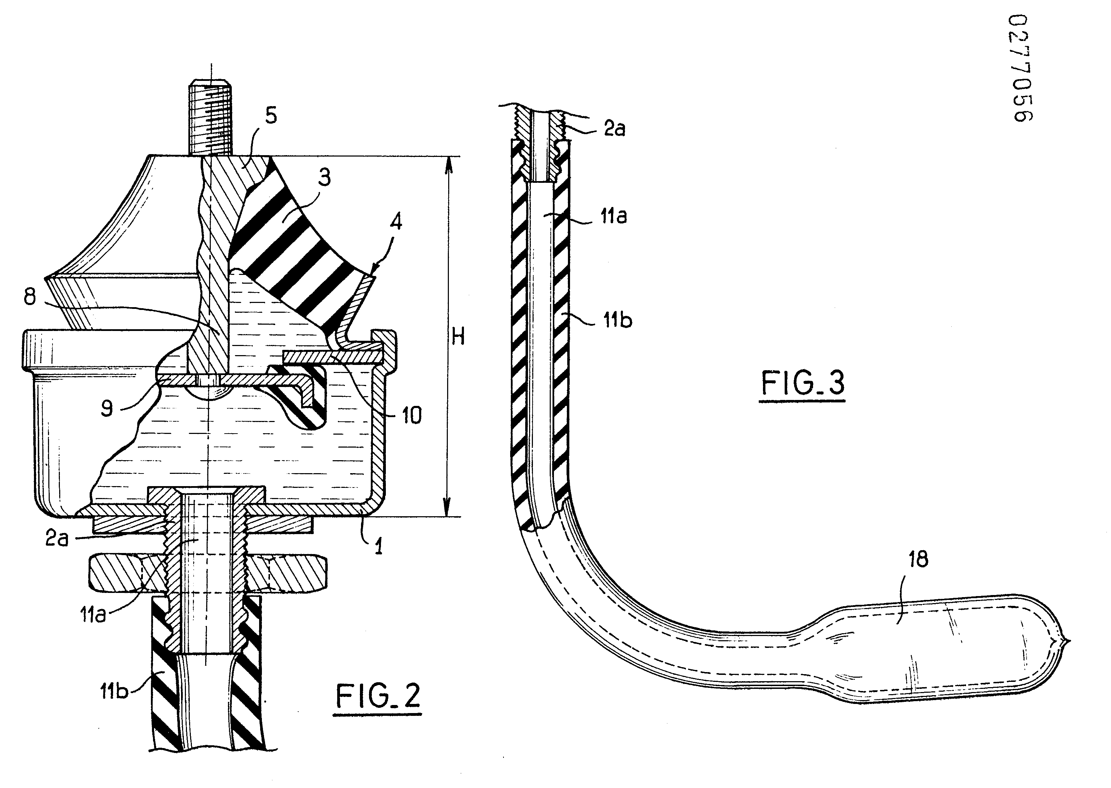

La figure 2 est une demie coupe axiale du dispositif dans une configuration différente.

La circulation du liquide d'amortissement - hors du volume enclos par le boitier rigide (1) et la membrane conique en composition élastomérique (3) adhérisée, d'une part, à l'armature rigide interne (5) dont l'axe (8) porte l'ensemble (9) constitué des butées de limitation de débattement solidaires de leur rondelle support et, d'autre part, à l'armature rigide externe (4) - est reportée à l'extérieur du dispositif par l'intermédiaire d'un canal (11a), menagé dans l'axe de la vis centrale (2a) de fixation du boitier rigide au chassis, vis qui doit être prévue d'un diamètre très supérieur à celui qu'elle avait dans la configuration de la figure 1.

La colonne de liquide d'amortissement est réalisée au moyen d'un tube (11b), en composition élastomérique, à paroi épaisse, qui vient s'adapter à l'extrémité du canal (11a) sur la vis centrale de fixation du boitier rigide au chassis (2a).

La paroi épaisse du tube en composition élastomérique (11b) permet, grâce à son indéformabilité, à la colonne de liquide d'amortissement de conserver une section à peu près constante et, cependant, d'accepter une courbure qui autorise sa disposition dans une zone abritée, le long du chassis du véhicule, par exemple.

Cette colonne de liquide d'amortissement dont la longueur est de l'ordre de 20 à 25 fois le diamètre moyen, a pour fonction de laisser libre passage au liquide d'amortissement vers une vessie d'expansion qui se gonfle et se dégonfle, alternativement, sous une faible pression dynamique.

La figure 3 est une vue, en coupe partielle, de la vessie constituant le volume élastique externe, utilisée dans la configuration de la figure 2.

Le tube en composition élastomérique, à paroi épaisse (11b), comporte à son extrémité une vessie (18) - réalisée par moulage sous l'effet d'une pression interne de l'extrémité dudit tuyau -qui se déformera, de façon préférentielle, sous l'effet des faibles pressions dynamiques alternatives du liquide d'amortissement exercées par la déflexion du support élastique, laissant pratiquement inchangées les dimensions du tube en composition élastomérique, à paroi épaisse (11b).

La hauteur (H) du dispositif élastique d'isolation antivibratoire varie, selon la déflexion dudit support, à la fréquence préférentielle dont est recherché l'amortissement. La colonne de liquide d'amortissement (11a), contenue dans le tube en composition élastomérique à paroi épaisse (11b), subit des déplacements alternatifs, amplifiés dans le rapport de la section efficace, -que la membrane conique en composition élastomérique (3) présente aux variations de la hauteur (H) du support élastique rapportée à la section moyenne du tube en composition élastomérique à paroi épaisse (11b) - et va s'épanouir dans la vessie d'expansion du liquide d'amortissement (18), dont le diamètre et la longueur s'accroissent simultanément, cet accroissement compensant approximativement la variation de la hauteur (H) de l'ensemble du dispositif.

De tels déplacements du liquide d'amortissement, d'une amplitude dépassant le décimètre le long de la colonne pour des débattements de plus ou moins un millimètre sur la hauteur (H) de l'ensemble du dispositif, jouent le même rôle, dans la configuration de la figure 1, par gonflement de la membrane cylindrique externe en composition élastomérique (12) et dans la configuration de la figure 2, par gonflement volumique (diamétral et longitudinal) de la vessie d'expansion du liquide d'amortissement (18).

Ces déformations millimétriques se produisent par tractions alternées mais sont de si faible amplitude que la vie de fatigue du dispositif n'est pas altérée.

Toutefois, les parties du dispositif les plus sollicitées en déformation, telles la membrane cylindrique externe en composition élastomérique (12) visible sur la figure 1 ou la vessie d'expansion du liquide d'amortissement (18) décrite sur la figure 3, qui sont des éléments extérieurs au dispositif lui-même, pourraient être facilement remplacées, en cas de défaillance, sans nécessité d'immobilisation prolongée du véhicule.

La réalisation d'un tel dispositif consiste dans les opérations suivantes :
- tout d'abord est réalisée, sous presse, au cours d'une opération de moulage familière à l'industrie de transformation du caoutchouc, la fabrication de l'ensemble constitué de l'armature rigide interne (5), de la membrane conique en composition élastomérique (3) et de l'armature rigide externe (4), la liaison intime de ces trois éléments se produisant en simultanéité avec la vulcanisation de la composition élastomérique;
- par ailleurs, est réalisé, dans une opération de moulage analogue, l'ensemble (9), constitué des butées de limitation de débattement solidaires de leur rondelle support ;
- une opération d'assemblage permet de mettre en place la rondelle métallique d'appui (10) et de fixer l'ensemble (9), constitué des butées de limitation des débattements solidaires de leur rondelle support, sur l'axe (8) de l'armature rigide interne (5) ;
- une opération de sertissage termine le montage de l'ensemble précédemment constitué dans le boitier rigide (1).

Selon la variante du dispositif choisie, l'on procède, alors, à l'une des opérations suivantes :
- soit l'on termine le montage mécanique du dispositif conformément à la configuration de la figure 1 et son remplissage par le liquide d'amortissement en venant apposer, à la périphérie du boitier rigide (1) une membrane cylindrique externe en composition élastomérique (12) - fabriquée par ailleurs -qui est fixée au boitier rigide (1) par des colliers de serrage (13) et (14),
- soit l'on termine le montage mécanique du dispositif conformément à la configuration des figures 2 et 3 et son remplissage par le liquide d'amortissement en venant y adjoindre le tube en composition élastomérique à paroi épaisse (11b) terminé par la vessie d'expansion du liquide d'amortissement (18).

La vessie d'expansion du liquide d'amortissement (18) qui termine - en en faisant partie intégrante - le tube en composition élastomérique à paroi épaisse (11b), est obtenue par le moulage et la vulcanisation, de l'extrémité pincée dudit tuyau après expansion dans l'enceinte creuse ou matrice d'un moule, sous l'effet d'une pression interne, ce qui a pour effet d'amincir la paroi et de rendre la zone constituant la vessie d'expansion (18) déformable de façon préférentielle.

La disposition d'isolation antivibratoire à amortissement hydraulique intégré, objet de l'invention, destiné à assurer la suspension élastique des groupes motopropulseurs des véhicules ou des cabines des poids lourds, présente les avantages suivantes par rapport aux solutions de l'art antérieur :
- sous une présentation analogue à celle des supports antivibratoires à amortissement hydraulique incorporé classiques, il évite la nécessité d'adjonction de butées de limitation de débattement complémentaires, souvent source de défaillance par usure mécanique,
- grâce à la souplesse du montage des composants, il permet l'ajustement de la longueur de la colonne de liquide d'amortissement et, par conséquent, le réglage de la fréquence de résonance du système,
- grâce à la conception qui transfère, à l'extérieur du boitier rigide serti, les éléments les plus sollicités, il autorise un échange des pièces, en cas de défaillance, sans immobilisation prolongée du véhicule.

L'homme de l'art peut, bien entendu, apporter au dispositif élastique d'isolation antivibratoire à amortissement hydraulique intégré, objet de l'invention, et à ses variantes, décrites à titre d'exemples non limitatifs, diverses modifications sans sortir du cadre de l'invention.

**Revendications**

1°) Dispositif élastique d'isolation antivibratoire à amortissement hydraulique intégré, comportant un support élastique constitué d'une membrane conique épaisse en composition élastomérique (3) adhérisée à une armature rigide interne (5) et à une armature rigide externe (4) et sertie dans un boitier rigide (1) enfermant un liquide d'amortissement agissant par inertie d'une colonne de grande longueur par rapport à sa section moyenne, caractérisé en ce qu'un ensemble (9), constitué de butées progressives de limitation des débattements solidaires d'une rondelle support, est enfermé dans la chambre ainsi constituée et en ce que le volume destiné à l'expansion du liquide d'amortissement refoulé par les débattements est reporté à l'extérieur du boitier rigide (1) qui délimite le support élastique, permettant insi l'ajustement de la longueur de la colonne de liquide d'amortissement et, par conséquent, le réglage de la fréquence de résonance du dispositif.

2°) Dispositif élastique d'isolation antivibratoire à amortissement hydraulique intégré selon la revendication 1, caractérisé en ce que la colonne de liquide d'amortissement (11) est enroulée sur la périphérie du boitier rigide (1), en ce qu'elle est ménagée dans une gorge circulaire située sur la périphérie de la membrane conique interne en composition élastomérique (3) et en ce qu'elle est mise en communication avec la chambre d'expansion cylindrique créée entre le boitier rigide (1) et la membrane cylindrique externe en composition élastomérique (12) fixée, par collier, à ses extrémités, autour dudit boitier rigide (1).

3°) Dispositif élastique d'isolation antivibratoire à amortissement hydraulique intégré selon la revendication 1, caractérisé en ce que la colonne de liquide d'amortissement est contenue dans un tube de composition élastomérique à paroi épaisse (11b), en communication avec la chambre remplie de liquide d'amortissement interne au boitier rigide (1) par l'intermédiaire d'une vis creuse (2a), terminé à son extrémité opposée par une vessie (18) qui en est partie intégrante et constitue le volume d'expansion - externe à la partie du dispositif qui constitue le support élastique - pour le liquide d'amortissement refoulé lors des débattements.

0277056

FIG_1a

FIG_1b

FIG. 2

FIG. 3

0277056

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | DE-A-3 509 000  (NISSAN) <br> * Page 7, ligne 27 - page 12, ligne 16; figures 2,3 * | 1 | F 16 F   13/00 <br> B 60 K    5/12 |
| A | | 3 | |
| | --- | | |
| Y | DE-A-3 239 787  (DAIMLER-BENZ) <br> * Page 1, revendication 1; figure unique * | 1 | |
| | --- | | |
| Y | DE-A-3 245 653   (METZELER KAUTSCHUK) <br> * En entier * | 1 | |
| A | | 2,3 | |
| | --- | | |
| Y | DE-C-3 522 333   (CONTINENTAL GUMMI) <br> * Colonne 1, revendication 1; figures 1,2 * | 1 | |
| | --- | | |
| A | PATENT ABSTRACTS OF JAPAN, vol. 8, no. 12 (M-269)[1449], 19 janvier 1984; & JP-A-58 174 737 (MASAO AKIMOTO) 13-10-1983 | 1,3 | |
| | --- | | **DOMAINES TECHNIQUES RECHERCHES (Int. Cl.4)** |
| P,A | EP-A-0 236 199  (PEUGEOT) <br> * Colonne 2, ligne 39 - colonne 4, ligne 1; figures 1-6 * | 1,2 | F 16 F <br> B 60 K |
| | --- | | |
| P,A | EP-A-0 219 786  (LEMFÖRDER METALLWAREN) <br> * Pages 5-7; figures 1-5 * | 1,2 | |
| | --- | | |
| A | FR-A-2 559 864  (HONDA) | | |
| | --- | | |
| A | PATENT ABSTRACTS OF JAPAN, vol. 8, no. 83 (M-290)[1520], 17 avril 1984; & JP-A-59 1830 (NISSAN JIDOSHA K.K.) 07-01-1984 | | |
| | ---                              -/- | | |

Le présent rapport a été établi pour toutes les revendications

| Lieu de la recherche | Date d'achèvement de la recherche | Examinateur |
|---|---|---|
| LA HAYE | 14-04-1988 | ESPEEL R.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................................
& : membre de la même famille, document correspondant

Office européen
des brevets

Numero de la demande

EP 88 40 0057

# RAPPORT DE RECHERCHE EUROPEENNE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-U-7 725 634 (PHOENIX)<br>--- | | |
| A | EP-A-0 164 887 (BRIDGESTONE)<br>----- | | |

DOMAINES TECHNIQUES RECHERCHES (Int. Cl.4)

Le présent rapport a été établi pour toutes les revendications

| Lieu de la recherche | Date d'achèvement de la recherche | Examinateur |
|---|---|---|
| LA HAYE | 14-04-1988 | ESPEEL R.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P0402)